(19) Europäisches Patentamt
European Patent Office
Office européen des brevets

(11) Veröffentlichungsnummer: **0 151 938**
**B1**

(12) **EUROPÄISCHE PATENTSCHRIFT**

(45) Veröffentlichungstag der Patentschrift: **29.08.90**

(21) Anmeldenummer: **85100289.9**

(22) Anmeldetag: **14.01.85**

(51) Int. Cl.⁵: **C 08 L 75/00**, C 08 J 9/00, C 08 K 3/04

# (54) Verfahren zur Herstellung von füllstoffhaltigen Polyurethan(harnstoff)-Massen, füllstoffhaltige Polyurethan(harnstoff)-massen und ihre Verwendung.

(30) Priorität: **26.01.84 DE 3402698**

(43) Veröffentlichungstag der Anmeldung:
**21.08.85 Patentblatt 85/34**

(45) Bekanntmachung des Hinweises auf die Patenterteilung:
**29.08.90 Patentblatt 90/35**

(84) Benannte Vertragsstaaten:
**AT BE CH DE FR GB IT LI NL SE**

(56) Entgegenhaltungen:
**DE-A-1 947 180**
**DE-A-2 929 872**
**FR-A-2 482 127**
**US-A-3 805 531**
**US-A-3 805 532**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Reischl, Artur, Dr.**
**H.T.-von-Böttinger-Strasse 19**
**D-5090 Leverkusen 1 (DE)**

**EP 0 151 938 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung ist ein Verfahren zur Herstellung von Braunkohle(nstaub) und/oder Torf als Füllstoffe enthaltenden, kationisch modifizierten, stückigen oder flächigen, die Füllstoffe abreibfest gebunden enthaltenden Polyurethan(harnstoff)- Massen mit einer sehr hohen Wasseraufnahmefähigkeit.

Die Herstellung erfolgt durch Umsetzung von kationisch modifizierten NCO-Prepolymeren mit einer Funktionalität von mehr als 2,1 mit einer weit überstöchiometrischen Menge an Wasser in Gegenwart von Braunkohle(npulver) und/oder Torf, gegebenenfalls in Gegenwart von weiteren anorganischen/ organischen Füllstoffen und gegebenenfalls in Gegenwart von Biomassen (lebenden Zellen, lebenden Bakterien, Enzymen).

Die entsprechenden Polyurethan(harnstoff)-Massen enthalten bis zu 95 Gew.-% Braunkohle undoder Torf in der füllstoffhaltigen Polyurethan(harnstoff)-Masse (Feststoff) und sind von der Herstellung her bereits gequollen. Ihr Wasseraufnahmefähigkeitswert (WAF) bei Suspendierung in Wasser beträgt 33 bis 97 Gew.-% Wasser.

Sie finden daher—in gegebenenfalls Biomassen eingebaut enthaltender Form—Verwendung als Träger in mikrobiellen Syntheseverfahren zur Herstellung komplizierter organischer Verbindungen oder als spezielle Träger für das Wachstum von Pflanzen.

Füllstoffhaltige Polyurethane mit hoher Wasseraufnahmefähigkeit sind in Form von Schleifmittelhaltigen, wasserhaltigen Polyurethanhangelen (Hydrogelen) aus der DE—OS 3 151 925 bekannt. Dort werden 20 bis 80 Gew.-% Schleifmittel, z.B. Aluminiumoxid, Ceroxid, Wolframdioxid, Borcarbid, Siliciumcarbid, Asbestpulver und gegebenenfalls zusätzlich Graphit, Mikroglaskugeln, Glimmer oder Kurzfasern, weiterhin gegebenenfalls Fungizide, Farbstoffe oder Farbpigmente, durch Umsetzung von hydrophilen NCO-Prepolymeren (auf Basis≥30 Gew.-% Oxyethylengruppen-haltigen Polyoxyalkylenethern) mit den wäßrigen, gegebenenfalls polyaminhaltigen Schleifmittelaufschlämmungen zu elastischen Schleifmittelgelen auf Polyurethan(harnstoff)-Basis umgesetzt.

Die hydrophile Eigenschaft der Gele beruht hierbei auf der Verwendung von hydrophilen (oxyethylengruppenhaltigen) Polyetherpolyolen aus Ausgangsmaterialien.

In der DE—OS 23 47 299 und DE—OS 25 21 265 werden homogene oder durch $CO_2$ schaumartig aufgetrieben, wassergequollene Polyurethan(harnstoff)-Gele beschreiben, welche bis zu 50 Volumen-% Füllstoffe wie Silikate, Kieselsäuretypen, Aluminiumoxide, Zinnoxid, Antimontrioxid, Titandioxid, Graphit und graphierte Kohle, Retortenkohle, Ruß, pulverige Zementarten, Farbpigmente oder Fasern, sowie Zellulosepulver neben Tensiden oder Nährstoffen enthalten können. Auch hier beruht die Wasseraufnahme in den Gelen im wesentlichen in der Verwendung von hydrophilen Polyetherpolyolen mit ≥40 Gew.-% Oxyethylensequenzen.

In der DE—OS 31 03 499 werden im wesentlichen wasserfreie Polyurethangelmassen mit Polyolen als Dispersionsmittel beschreibene, welche Wirkstoffe und gegebenenfalls zusätzlich Farbstoffe, Pigmente, Fasern, anorganische Füllstoffe, Metallpulver, Aktivkohle, Zellulosepulver und Kieselsäurepräparate enthalten können. Solche polyolhaltigen Gele sind für den vorgesehenen Verwendungszweck ungeeignet, da sie in wäßriger Suspension zumindest einen großen Teil der dispergierten Polyole abgeben.

Ebenso ist die Einbettung von wachstumsfähigen Zellen in Polyurethan-Hydrogelen bekannt: siehe z.B. Tanaka et al., European Journal of Applied Microbiology and Biotechnology, 7, (1979) ab Seite 371. Auch in der DE—OS 29 29 872 wurde ein verfahren zur Herstellung von hydrophilen, gelförmigen oder geschäumten Biokatalysatoren mit hoher Beladung an enzymatisch aktiver Substanz durch Polymereinschluß ganzer Zellen, von Zellfragmenten oder Enzymen, durch Mischen einer wäßrigen Suspension der enzymatisch aktiven Substanz mit hydrophilen Polyisocyanaten unter Bildung eines enzymatisch hochaktiven, hydrophilen Polyurethan-Netzwerks in Blockform oder parlförmiger Form beschrieben. Auf Seite 7 der genannten Offenlegungsschrift werden zum Stand der Technik auch weitere Veröffentlichungen genannt.

In den Polyurethangelen nach dem Stand der Technik müssen zwangsläufig hydrophile Polyurethane auf der Basis von Polyethern mit hohen Anteilen an Oxyethylensegmenten aufgebaut werden, um eine ausreichende Wasseraufnahmefähigkeit zu erreichen. Hierbei ergeben sich oft Reaktivitätsprobleme der (zumeist hohe Aktivitäten aufweisenden) hydrophilen Polyetherpolyole, Problem bei der mechanischen Gelfestigkeitkeit bei Verwendung hochhydrophiler Polyetherpolyole, abgesehen von dem hohen Preis derartig aufgebauter hydrophiler Polyurethanmassen.

Es wurde nun gefunden, daß man füllstoffhaltige, abreibbeständige Polyurethan(harnstoff)e mit einem außerordentlich hohen Wasserrückhaltevermögen dadurch aufbauen kann, daß man als Füllstoffe Braunkohle(npulver) und/oder Torf verwendet, wobei zur Polyurethan(harnstoff)-Bildung hydrophile und/ oder auch hydrophobe Polyurethan-Ausgangskomponenten verewndet werden können. Die Umsetzung erfolgt durch Reaktionen von NCO-Prepolymeren, von Braunkohle/Torf und einem größen Überschuß an Wasser, vorzugsweise mit Suspensionen der Braunkohle/Torf in Wasser.

Erfindungsgemäß werden kationische Gruppen bzw. kationbildende Gruppen (z.B. tertiäre Amingruppen-haltige) enthaltende Polyurethan-Reaktionskomponenten eingesetzt, bzw. kationische Polymere der Reaktionsmischung zugesetzt. Hierdurch wird sowohl eine hervorragende Benetzung der Braunkohle oder Torf-Teilchen bei der Reaktion erzielt, als auch in den füllstoff-haltigen Trägern die

löslichen Anteile aus Braunkohle oder Torf (vorzugsweise Huminsäuren) hervorragend zurückgehalten, so daß die erfindungsgemäßen Träger in wäßriger Suspension kein Ausbluten von z.B. Huminsäuren zeigen, wie dies üblicherweise bei braunkohle- oder torfhaltigen Substanzen der Fall ist.

Erfindungsgemäße ist es möglich, aber nicht bevorzugt, bei der Polyurethan(harnstoff)-Bildung außer den beanspruchten Füllstoffen noch Biomassen zuzusetzen, und so evtl. lebende Bakterien, funktionsfähige Zellen, Zellteile oder auch Enzyme einzubinden.

Es war Aufgabe der Erfindung, "hochhydrophile" Träger auf Basis von Polyurethanen zur Verfügung zu stellen, die abriebfest, mechanisch beständig, durch Verwendung von hohen Menge an Füllstoffen verbilligt und bei der Auswahl von polyurethanbildenden Ausgangskomponenten nicht an den ausschließlichen Einsatz hochhydrophiler Polyetherpolyole (mit hohen Anteilen an Oxyethylengruppen) gebunden zu sein. Weitere Aufgeben gehen aus der Beschreibung hervor. Die Träger sind insgesamt "hochhydrophil", d.h. von hoher Wasseraufnahmefähigkeit—sowohl bei hydrophiler wie auch hydrophober Polyurethan-Matrix.

Gegenstand der Erfindung ist somit ein Verfahren zur Herstellung von füllstoffhaltigen, hydrophilen Polyurethan(harnstoffen) aus NCO-Prepolymeren, Füllstoffen und Wasser, das dadurch gekennzeichnet ist, daß man

A) di- und/oder mehrfunktionnelle, hydrophile und/oder hydrophobe NCO-Prepolymere, mit einer Funktionalität ≥2,1, besonders bevorzugt ≥2,5, und einem NCO-Gehalt von 2 bis 12 Gew.-% NCO (vorzugsweise 2,5 bis 8 Gew.-%), auf der Basis von

a) zwei- und/oder mehrfunktionellen, hydrophilen und/oder hydrophoben, höhermolekularen Verbindungen mit gegenüber Isocyanaten reaktiven H-Atomen mit Molekulargewichten von 400 bis 10 000, vorzugsweise Polyhydroxylverbindungen, insbesondere mehrfunktionellen Polyetherpolyolen mit einer Gesamtfunktionlität von ≥2,1, insbesondere ≥2,5,

b) 0 bis 5 Mol, vorzugsweise 0 bis 2 Mol, pro Mol a) niedermolekularen, zwei und/oder mehrwertigen Verbindungen des Molekulargewichts 32 bis 399, vorzugsweise 62 bis 254, und gegenüber Isocyanaten reaktiven H-Atomen, vorzugsweise Di- und/oder Polyolen,

c) kationische Gruppe aufweisenden oder kationische Gruppen bildenden Polyurethan-Ausgangskomponenten

d) überschüssigen Mengen bezogen auf a) bis c) an Di- und/oder Polyisocyanaten, vorzugsweise aromatischen Diisocyanaten, zur Ausbildung von NCO-Prepolymeren mit NCO-Gehalten von 2 bis 12 Gew.-% NCO (vorzugsweise 2,5 bis 8 Gew.-%),

B) gegebenenfalls mit Zusätzen von weiteren, niedermolekularen Polyisocyanaten zum NCO-Prepolymer A) in Mengen bis zum halben Gewichtsanteil von A) und bis zur Ausbildung von (A+B)-Mischungen mit NCO-Gehalten ≤ 30 Gew.-% NCO,

C) in überstöchiometrischen Mengen an Wasser, vorzugsweise einer mindestens 2-fachen bis etwa 60-fachen Gewichtsmenge, bezogen auf Feststoffgehalt von A+B,

gegebenenfalls in Mischung mit Polyaminen, wobei diese vorzugsweise bis maximal 50 Äquivalent-% der NCO-Gruppen in A/B verwendet werden,

D) mit Braunkohle und/oder Torf, vorzugsweise Braunkohlenpulver und/oder feinteiligem Schwarztorf, in Mengen von 0,1 bis 95 Gew.-%, vorzugsweise ≥15 bis 95 Gew.-%, besonders bevorszugt >50 bis 90 Gew.-%, bezogen auf die füllstoffhaltigen Polyurethan(harnstoff)-Massen (als Trockensubstanz) und

E) gegebenenfalls in Gegenwart von weiteren anorganischen und/oder organischen Füllstoffen (wobei stückige, zerkleinerte Schaumstoffe ausgenommen sind) und üblichen Zusatzstoffen, Katalysatoren und Hilfsmitteln der Polyurethanchemie,

zu füllstoffhaltigen, hydrophilen, in wäßrigem Milieu abriebfesten, stark quellfähigen, nicht ausblutenden, vorzugsweise stückigen Polyurethan(harnstoff)-Massen mit einem Wert der Wasseraufnahmefähigkeit (WAF-Wert) von ≥33 Gew.-% bis 97 Gew.-%, bezogen auf wassergequollene, füllstoffhaltige Polyurethan(harnstoff)-Suspension ohne überstehendes Wasser, und einem Gehalt an kationischen Gruppen von 10 bis 3000, vorzugsweise 30 bis 1500 Milliäquivalenten kationischer oder kationbildender Gruppen pro 1000 g wasser- und füllstofffreier Polyurethan(harnstoff)-Masse, umsetzt.

Weiterer Erfindungsgegenstand sind die nach dem beanspruchten Verfahren zugänglichen, Braunkohle und/oder Torf enthaltenden, Polyurethan(harnstoff)-Massen hoher Wasseraufnahmefähigkeit, gekennzeichnet insbesondere durch einen Braunkohlen- und/oder Torf-Gehalt von 15 bis 95 Gew.-%, einen kationische Gruppen oder kationische Gruppen bildenden Gruppen-Gehalt von 30 bis 1500 Milliäquivalenten pro kg und einer Wasseraufnahmefähigkeit von >50 bis 95 Gew.-% Wasser, bezogen auf wassergequollene, füllstoffhaltige Polyurethan(harnstoff)-Suspension.

Die erfindungsgemäßen Braunkohle- und/oder Torf-Füllstoffe sind somit in einer (kationmodifizierten) Polyurethan(harnstoff)-Matrix gebünden, wobei die füllstoffhaltigen Polyurethan(harnstoffe) zumeist in feinteiliger oder stückiger Form vorliegen.

Erfindungsgegenstand ist ferner die Verwendung der erfindungsgemäßen Massen als in Wasser gut suspendierbare, gegebenenfalls Biomassen eingebaut enthaltende Träger in Biokonversionsprozessen zur Herstellung organischer Verbindungen, als gegebenenfalls Pflanzenwuchsstoffe, Dünger oder Samen enthaltende Träger für Pflanzenwachstum mit hohem Wasserbindevermögen, als Filtriermedien oder Adsorbentien für wasserunlösliche Flüssigkeiten (z.B. (Roh)Oel).

Die erfindungsgemäß verwendeten Füllstoffe D) sind Torf, z.B. Weiß- oder Schwarztorf und

Braunkohle. Unter den Torfen ist der Schwarztorf bevorzugt. Der geeignetste Füllstoff für die Erfindung ist jedoch Braunkohle (in ihrer gemahlenen Form als sogenannter Braunkohlenstaub, der zumeist eine Restfeuchte von ≤60 Gew.-%, bevorzugt 5—20 Gew.-% Wasser enthält). Torf und Braunkohle sind wegen ihrer stark wasserbindenen Eigenschaften außergewöhnlich wirksame Verbindungen, um die Hydrophilie von Polyurethan(harnstoff)-Trägern, überraschenderweise auch solchen auf Basis von hydrophoben Polyurethanausgangskomponenten, sehr wirksam zu erhöhen. Es hat sich gezeigt, daß sowohl durch die mechanische Struktur der Braunkohle oder des Torfes als auch durch ihre wasseraufsaugende Wirkung erfindungsgemäß Ausgezeichnet zur vewendende Träger mit sehr hoher Wasseraufnahmefähigkeit entstehen. Am geeignetsten ist Braunkohlenstaub, der beispielsweise mit Gehalten an Kohlenstoff von etwa 68%, H von 5,3%, O von 25,7% und N von 1,0% (bezogen auf Trockensubstanz) ausgezeichnete Ergebnisse liefert Dabei sind nur geringe Mengen an Polyurethan-Matrix, z.B. 5 bis 20 Gew.-% notwendig, am abreibbeständige, füllstoffhaltige Polyurethan(harnstoff)-Trägermessen aufzubauen. Torf und Braunkohle vermögen hohe Mengen an Wasser zu binden, ohne das sich diese Materialien naß anfühlen—z.B.≥150% Wasser, bezogen auf Braunkohle- oder Torf-Trockensubstanz. Selbst Braunkohlenstaub aus nativer Braunkohle enthält noch ca. 40 bis 60% Wasser. Mit Braunkohle oder Torf lassen sich sehr hohe Füllstoffgehalte (d.h. Bildung mit einer nur sehr geringen Menge von Polyurethan-Matrix) erzielen.

In einer besonders bevorzugten Ausführungsform enthalten die füllstoffhaltigen Polyurethan(harnstoffe) >50 bis 95 Gew.-% an Braunkohle und/oder Torf. Hervorragende Ergebnisse erzielt man mit Braunkohle/Torf-Mengen von 75 bis 90 Gew.-%, bezogen auf füllstoffhaltige PU-Trokkenmasse; ganz besonders günstig ist die Verwendung von Braunkohle.

Neben den erfindungswesentlichen Füllstoffen D) (Braunkohle und/oder Torf) können, bevorzugt in untergeordneten Mengen von weniger als der Hälfte der Braunkohle/Torf-Füllstoffmengen-, weitere, übliche Füllstoffe E) zugegeben werden.

Hier handelt es sich beispielsweise um Aktivkohle, Holzkohlenpulver, Steinkohlenpulver, Kokspulver, Zellulosepulver und Korkmehl, ferner um feinteilige, über 100°C schmelzende organische Destillationsrückstände, insbesondere Destillationsrückstände der Toluylendiisocyanat-Destillation, welche beispielsweise durch Eintragen der Destillationsrückstände in Wasser unter Denaturierung und anschließende Zerkleinerung erhalten werden. Diese TDI-Rückstände können gegebenenfalls auch noch nachträglich durch Behandlung mit reaktive Wasserstoffe tragenden Verbindungen wie Ammoniak, Polyole oder Polyaminoverbindungen modifiziert sein. In vielen Fällen tragen sie noch geringe Mengen inkludierter NCO-Gruppen oder reaktive Abwandlungsprodukte von Isocyanaten. Derartige Destillationsrückstände werden beispielsweise in DE—OS 28 46 814, 28 46 809, 28 46 815, beschreiben. Weiterhin geeignete Destillationsrückstände sind aber auch hochschmelzende Destillationsrückstände von Aminen, Phenolen, Caprolactum u.ä.

Die anorganischen Füllstoffe wie Quarz, Seesand, pyrogene Kieselsäure (Aerosil), Silikate, Alumosilikate, Bentonite, Aluminiumoxid, Bimsstein, Diatomeenerde, Kieselsole, Wasserglas, aber auch Calciumoxid, Calciumcarbonat, Schwerspat, Gips, insbesondere aber auch feinteilige (Eisen-II- und/oder -III-)-Eisenoxide in Pigmentform oder als Magnetite werden bevorzugt nur in Anteilen neben den Braunkohle/Torf-Füllstoffen zugesetzt, um eine gewisse Regulierung der Oberflächenaktivität des speizifischen Gewichts der Träger zu gestatten, so daß diese in Wasser absinken oder schweben, jedoch keinesfalls aufschwimmen.

Als modifizierende Füllstoffzusätze können auch Fasern (z.B. anorganische Fasern) wie Glasfasern oder natürliche bzw. synthetische Fasern (z.B. Baumwollstaub) mitverwendet werden.

Die Korngröße der Füllstoffe liegt im allgemeinen zwischen 0,5 bis 1000 µm, bevorzugt unter 300 µm, besonders bevorzugt unter 100 µm, wobei insbesondere für Aktivkohle und anorganische Bestandteile sowie beim Steinkohlenpulver bzw. Holzkohlenpulver geringere Korngrößen bevorzugt werden als etwa bei dem erfindungsgemäß verwendeten Torf oder Braunkohlenstaub, da bei Torf und Braunkohle gegebenenfalls natürliche faserige Anteile mit enthalten sein können.

Der gesamte Füllstoffanteil soll über 15 Gew.-%, bevorzugt ⩾20 Gew.-%, bezonders bevorzugt ⩾40 Gew.-% betragen, wobei eine Obergrenze von ⩽95 Gew.-%, bevorzugt ⩽90 Gew.-% eingehalten wird. Die Anteile Füllstoffe werden in Gew.-%, bezogen auf die Trockensubstanz der gefüllten Polyurethan(harnstoff) massen berechnet. Die Obergrenze wird im allgemeinen von Zusammenhalt und der Abreibbeständigkeit der hochgefüllten Polyurethanmassen bestimmt.

Die Füllstoffe werden während der Bildung der Polyurethan(harnstoff)-Matrix in verschiedenen, in der Beschreibung noch näher angegebenen Ausführungsformen eingebracht. So können sie einen der Ausgangsstoffe oder der vorpolymeren Produkte, vorzugsweise den NCO-Prepolymeren oder den OHfunktionellen, höhermolekularen Polyolen, untergemischt werden und dann kann mit dieser Mischung die polyurethan(harnstoff)bildende Reaktion durchgeführt werden. Bevorzugt werden jedoch die Füllstoffe zunächst mit Wasser benetzt oder angeteigt oder in Wasser dispergiert und mittels Zugabe der NCO-Prepolymeren von diesen umhüllt und gebunden, wobei jedoch gleichzeitig der Polyurethan(harnstoff)-Aufbau (insbesondere mittels Wasser als Kettenverlängerungsmittel) erfolgt.

A) NCO-Prepolymere

Als PU-bildende Ausgangskomponenten für die Herstellung der NCO-Prepolymeren werden die an sich bekannten Ausgangskomponenten eingesetzt:

a) als höhermolekulare Polyhydroxyverbindungen mit Molekulargewichten von 400 bis 10 000, vorzugsweise 800 bis 8000, werden zwei- und/oder mehrfunktionelle höhermolekulare Polyole eingesetzt, welche Funktionalitäten ≥2,1, besser ≥2,5 (und bis ca. 5, vorzugsweise ≤3,5) aufweisen.

Als Polyhydroxylverbindungen sind Polyether vor den prinzipiell gleichfalls verwertbaren Polyestern, Polycarbonaten oder Polylactonen sehr bevorzugt, da sie auch im Langzeitverhalten wesentlich hydrolysenstabiler als die Estergruppen aufweisenden Polyhydroxylverbindungen sind.

Für den Aufbau von hydrophilen Polyurethanen sind solche Polyoxyalkylenether geeignet, welche eine größere Zahl, z.B. mehr als 20 Gew.-%, oftmals ≥30 Gew.-%, insbesondere ≥40 Gew.-% jedoch weniger als 85 Gew.-% an Oxyethylen-Sequenzen enthalten. Die Oxyethylengruppen können endständig, statistisch verteilt oder bevorzugt segmentartig, oder sowohl endständige als auch segmentartig (im Inneren), in den Polyethern eingebaut sein. Die Polyoxyalkylenether können jedoch auch geringe Mengen an z.B. cycloaliphatischen oder aromatischen Gruppiermungen enthalten, beispielsweise wenn sie auf cycloaliphatischen Polyolen oder aromatischen Verbindungen z.B. Dihydroxycyclohexanen oder Hydrochinon-bishydroxyethylethern oder 4,4'-Dihydroxy-diphenyl-dimethylmethan gestartet sind. Auch aus höherfunktionellen Zuckeralkoholen oder Zuckern können durch Alkoxylierung geeignete Polyole aufgebaut werden. Hydrophile Polyether mit <30 Gew.-% Oxyethylen-Sequenzen werden bevorzugt.

Es können jedoch-überraschenderweise und bevorzugt-auch hydrophobe Polyether zum Aufbau der PU-Matrix verwendet werden, z.B. Polyoxypropylenpolyole ohne oder mit geringen (z.B. <20 Gew.-%) an eingebauten Oxyethylensegmenten, welche keine hydrophilen PU-Gel-Matrix ergeben. Überraschenderweise lassen sich auf der Basis Braunkohle und/oder Torf auch hiermit hohen Wasseraufnahmefähigkeitswerte (WAF) zeigende Trägersystem aufbauen, die zumeist sogar eine verbesserte Trägersysteme aufbauen, die zumeist sogar eine verbesserte Langzeitbeständigkeit in wäßrigen Biokonversionsmedium aufweisen. Mit Steinkohlenstuab, Ruß oder Aktivkohle werden dagegen gefüllte Polyurethane erhalten, die bedeutend geringere Wasseraufnahmefähigkeitswerte zeigen, da derartige oberflächenaktive Köhlen die erfindungsgemäß notwendigen Wasseraufnahmefähigkeitswerte nicht ergeben.

Die Polyether auf Basis von Propylenoxid-Addukten sind die erfindungsgemäß bevorzugten Polyether; die Polyether können jedoch auch auf Basis anderer Alkyloxirane, z.B. Epichlorhydrin, Epoxybutane oder ihrer Mischungen mit z.B. Propylenoxid in üblicher Weise aufgebaut werden. Besonders günstig erweisen sich erfindungsgemäß auch die hydrophoben Polypropylenglykole.

Weiterhin sind auch Polyetheramine mit endständigen Endgruppen, z.B. durch Druckaminierung der sekundären Hydroxylgruppen oder Cyanethylierung und anschließender Reduktion erhältliche Polyether mit endständigen aliphatischen Aminogruppen, oder aliphatische oder bevorzugt aromatische Polyetheramine, welche durch Alkalihydrolyse von NCO-Prepolymeren entstanden sind, geeignete Ausgangsmaterialien.

Die höhermolekularen Verbindungen a) können auch bis zu 40 Gew.-% höhermolekularer Polyadditionsprodukte, z.B. aus Hydrazinhydrat und Toluylendiisocyanat, enthalten oder sogenennte Polymerpolyole darstellen, d.h. bis zu 40 Gew.-% Copolymerisate, gegebenenfalls Pfropf(co)polymerisate z.B. auf Acrylnitril- und (Meth)acrylesterbasis, enthalten.

b) Niedermolekulare, zwei und/oder mehrwertige Verbindungen mit Molekulargewichten von 32 bis 399, vorzugsweise 62 bis 254, können, in modifizierenden Mengen mitverwendet werden, vorzugsweise Di- und/oder Polyole oder Aminoalkohole, z.B. Ethylenglykol, 1,2-Propylenglykol, 1,4-Butandiol, 2,3-Butandiol, Neopentylglykol, 2-Methyl-propandiol-1,3, Hexandiol-1,6, Dodecandiol-1,12, besonders die relativ hydrophilen di-, tri-, tetra- und höhermolekularen Polyethylenglykole mit Moleklargewichten bis 399, aber auch Di-, Tri- und Tetrapropylenglykoldiole oder Di-, Tri- und Tetraoxymethylenediole. Als Aminoalkohole sind beispielsweise einsetzbar Bis-hydroxyethyl-amin, Bis-2-hydroxypropylamin, Aminozucker oder 2-Amino-propandiol-1,3.

Die Menge an b) ist Null bis etwa 50 Mol b) pro Mol a), d.h. der Zusatz von b) zu a) kann während der NCO-Prepolymerbildung auch unterbleiben. Trifunktionelle Polyole b) können zur Steuerung der Gesamtfunktionalität der NCO-Prepolymeren eingebaut werden.

c) Beim Aufbau der hydrophilen und/oder hydrophoben Polyurethane werden kationische Gruppen oder kationische Gruppen bildende Gruppen mitzuverwendet. Als kationische Gruppen können im Prinzip quaternäre oder salzartige Ammoniumgruppen, aber auch Sulfonium- oder Phosphoniumgruppenierungen eingesetzt werden. Bevorzugt ist die Verwendung von quartären Ammoniumgruppen oder tertiäre Aminogruppen aufweisenden Verbindungen, welch letztere nachträglich in die Ammonium(salz)-Form überführt werden. Die Menge der einzubauenden kationischen Gruppen bzw. Kationen bildenden Gruppen beträgt 10 bis 3000 Milliäquivalente an Kationen bzw. Kationen bildenden Gruppen auf 1000 Gramm Feststoff-Polyurethan-Matrix. In den Fällen, wo man bereits quarternierte oder in Salzform überführte Verbindungen einsetzt, beträgt die Obergrenze im allgemeinen 2000 Milliäquivante pro 1000 g Feststoff PU, da andernfalls während der Reaktion eine zu hohe Viskosität sich störend bemerkbar macht. Bevorzugt werden 30 bis 1500 Milliäquivante kationischer oder Kationen bildender

Gruppierungen, besonders bevorzugt sind 50 bis 750 Milliäquivalente kationischer oder Kationen bildender Gruppen, auf 1000 Gramm Feststoff-Polyurethan eingebaut.

Als kationenbildende Verbindungen werden bevorzugt tertiäre Aminogruppen-enthaltende Di- oder Polyole verwendet z.B. N-Methyl-di-(ethanol)amin oder -(propanol)amin, N,N-Di-methylaminomethyl-propandiol-1,3, Bis-hydroxyethylpiperazin, aber auch höherfunktionelle Verbindungen, wie z.B. Triethanolamin oder höhermolekulare Verbindungen wie z.B. Polyoxyalkylenether, welche auf tert. Amin-Polyole, z.B. der genannten Art, gestartet sind. Es können jedoch auch OH-funktionelle, quaternierte Verbindungen wie z.B. Tetrahydroxyalkyl-ammoniumchloride oder -ammoniummethylsulfonate als Einbaukomponenten verwendet werden. Bisweilen ist es auch ausreichend, Verbindungen, welche tertiäre Amin-Endgruppen ergeben, in die Verbindungen einzubauen, z.B. N,N-Dimethylaminoethanol.

Durch Verwendung solcher kationisch modifizierter Polyurethane (oder gegebenenfalls zusätzlich anderer kationisch modifizierter Hochpolymerer) werden überraschenderweise die sonst wasserlöslichen Komponenten von Braunkohle oder Torf, nämlich die Huminsäuren und ähnliche saure, lösliche Verbindungen, quantitativ fixiert. Somit wird auch für die Verwendung großer Mengen an Torf und/oder Braunkohle als Füllmittel in den hydrophilen Trägern bei Einbringen in Wasser eine farblose, völlig klare wäßrige Phase erhalten. Bisher stand der Verwendung von Torf oder Braunkohle in wäßrigen Systemen der gravierende Nachteil dieser wohlfeilen Naturstoffe im Wege, daß eine Braunfärbung des Wassers duch Herauslösen beträchtlicher Anteile einer ganzen Reihe von in Wasser bei pH 5 bis 9 direkt löslicher oder kolloidal in Lösung gehender Bestandteile, beispielsweise Huminsäuren oder deren Vorstufen, eintritt, oder sogar eine starke Trübung erfolgt.

Zur Herstellung von kationischen oder Kationen bildenden Polyurethan(harnstoff)massen ist am besten ein Weg über Isocyanatprepolymere geeignet, welche kationische Gruppen eingebaut enthalten oder eine zur Kationenbildung befähigte Gruppierung wie tertiär gebundenen Stickstoff, besitzen. Zur Salzbildung können übliche Säuren zugesetzt werden, z.B. Salzsäure, Phosphorsäure oder Schwefelsäure. In manchen Fällen reicht jedoch auch bereits die Salzbildung mit den Huminsäuren aus.

Neben den Kationengruppen können jedoch bis zur, oder besser unterhalb der Ionenäquivalenz, auch Anionengruppen (z.B. Sulfonatgruppen) im Polymeren oder als (polymere) Zusätze unter Ausbildung von Ampholytsystemen anwesend sein. Ein überschuß von Anionen über die Kationengruppen ist bei Verwendung von Braunkohle oder Torf auf alle Fälle zu vermeiden, wenn die Huminsäuren im Polyurethan(harnstoff)-Träger gebunden bleiben sollen.

Die Kationengruppen in den hochgefüllten Polyurethan(harnstoff)massen haben nicht nur auf die Bildung der Braunkohle und/oder Torf einen entscheidenden, günstigen Einfluß, sondern auch auf die Abreibbeständigkeit von Füllstoffen. Außerdem sorgan die Ionenladungen für eine feindisperse Verteilung oder sogar Lösung der Isocyanatverbindungen in den in sehr hohen stöchiometrischen überschüssen angewendeten Mengen an Wasser (eine Art Emulgatorwirkung), so daß eine unerwünschte Koagulation der Polyurethane für sich selbst nicht auftritt, sondern eine sehr gleichmäßige Umhüllung der Füllstoffteilchen durch den sich bildenden Polyurethan(harnstoff)erfolgt.

Überraschenderweise hat sich auch gezeigt, daß anorganischen Füllstoffe, wie Quarz, Seesand oder Bimssteinpulver durch die kationischen Polyurethane erheblich stärker und abriebfest gebunden werden und daß sich während der Polyurethanbildung keine Sedimentationserscheinungen der anorganischen Füllstoffe ergeben. Diese Zugabe von anorganischen Füllstoffen wird zumeist zur Regulierung des spezifischen Gewichtes der PU-(H)-Träger durchgeführt, um das spezifische Gewicht so einzustellen, daß kein Aufschwimmen der Träger während der biologischen Konversionsvorgänge in wäßrigen Lösungen eintritt. Extrem feinteilige anorganische Füllstoffe (0,1 bis 10 µm) erhöhen zusätzlich die spezifische Oberfläche der Trägermassen. Eisenoxide vermögen die Sauerstoffübertragung günstig zu beeinflussen. Die anorganischen Füllstoffe werden im allgemeinen jedoch nur in modifizierenden Menge neben den anderen Füllstoffen, vorzugsweise neben Braunkohle und/oder Torf mitverwendet.

d) Als Polyisocyanate werden di- und polyfunktionelle Polyisocyanate eingesetzt, z.B. Hexandiisocyanat, Dicyclohexylmethandiisocyanat, Isophorondiisocyanat, bevorzugt jedoch aromatische Di- und Polyisocyanate, wie die Toluylendiisocyanat-Isomeren, Diphenylmethan-4,4'- und/oder 2,4'- und/oder 2,2'-Isomeren, sowie gegebenenfalls die höhermolekularen Polyphenylpolymethylenpolyisocyanate, wie sie durch Phosgenierung von rohen Formaldehyde-/Anilin-Kondensationsprodukten (Polyamingemischen) entstehend und als gegebenenfalls undestillierte Sumpfprodukte verwendet werden. Solfongruppen-haltige Polyisocyanate sind gleichfalls als hydrophile Polyisocyanate einsetzbar.

Als Polyisocyanate können jedoch weiterhin alle bekannten Polyisocyanate zur Umsetzung benutzt werden, wie sie beispielsweise in der DE—OS 28 32 253 ausführlich aufgeführt werden. In der letztgenannten DE—OS werden auch die Beispiele für a, b, und c) genannt.

Die reaktiven Komponenten a), b) und c) werden mit überschüssigen Mengen an Di- und/oder Polyisocyanaten zur Ausbildung von NCO-Prepolymeren A) mit NCO-Gehalten von 2 bis 12 Gew.-% NCO, vorzugsweise 2,5 bis 8 Gew.-%, insbesondere 2,5 bis 6 Gew.-% NCO, in üblicher Weise z.B. gemeinsamen Erwärmen der Komponenten bei 50 bis 100°C bis zur NCO-Prepolymerbildung, umgesetzt.

Die Gesamtfunktionalität der NCO-Prepolymeren A) soll mindestens 2,1, vorzugsweise $\geq$2,5 betragen, d.h. mindestens eine der Komponente a), b) und/oder c) muß mehr als bifunctionell sein.

Die NCO-Prepolymeren A) können gegebenenfalls mit weiteren Mengen an niedermolekularen Polyisocyanaten B) in Mengen bis zum halben Gewichtsanteil von A) und bis zur Ausbildung von A)+B)-Mischungen mit NCO-Gehalten von ≤30 Gew.-% NCO, vorzugsweise ≤20 Gew.-% NCO, vermischt werden. Es können dabei auch unterschiedliche Polyisocyanate zur Prepolymerbildung d) und zur wetieren Aufstockung B) des NCO-Gehaltes verwendet werden. Bei gleichen Polyisocyanaten kann auch bereits bei der Prepolymerbildung A) ein entsprechend hoher Anteil an Polyisocyanaten d) verwendet werden.

Bei Verwendung solcher Mischungen mit hohem NCO-Gehalt können bei der Herstellung der hochgefüllten Polyurethan(harnstoffe) entsprechend zusätzlich beispielsweise Polyetherpolyole oder OH-Gruppen enthaltende Polyetherpolyurethanvoraddukte mit endständigen OH-Gruppen zugegeben werden.

C) Die Umsetzung der NCO-Prepolymeren A) oder (A+B) erfolgt mit weit überstöchiometrischen Mengen an Wasser im heterodispersen System. Bevorzugt verwendet man die Wassermenge zum Anteigen oder Dispergieren der Füllstoffe.

Die NCO-Prepolymeren werden dann—gegebenenfalls selbst bereits in anteiligen Wassermengen dispergiert-, zugemischt, wobei die NCO-Prepolymeren im allgemeinen die Füllstoffe gut benetzen, umhüllen und dann mit Wasser relativ langsam (bei zugesetzten Mengen an Di- oder Polyaminen schneller) zur Polyurethan(harnstoff)-Matrix aushärten. Durch Erhöhung der Reaktionstemperatur kann die Wasserreaktion auf wenige Minuten verkürzt werden.

E) Als Zusatz und/oder Hilfstoffe können alle in der PU-Chemie üblichen Stoffklassen eingesetzt werden, z.B. Stabilisatoren, UV-Absorber, Dispergiermittel, Emulgatoren, Silikonderivate, Farbstoffe und Pigmente. Als Katalysatoren können die üblichen Polyurethankatalysatoren wie tert. Amine, Metallkatalysatoren oder Zinnkatalysatoren eingesetzt werden, was in vielen Fällen jedoch nicht zwingend erforderlich ist.

Die hydrophilen (wasseraufnahmefähigen), Braunkohle- und/oder Torf-haltigen Polyurethan(harnstoff)-Träger liegen bei Verwendung stark hydrophiler NCO-Prepolymeren in Form einer mehr oder minder gelartigen, gequollenen, gegebenenfalls schaumgelartigen Form vor, die sich feucht anfühlen.

Erfindungsgemäß hergestellte Trägermassen auf Basis hydrophober NCO-Prepolymerer weisen dagegen einen trockenen Griff auf und unterscheiden sich dadurch deutlich von den gelartigen Produkten. Sie zeigen eine gute Abriebfestigkeit und trotzdem überraschend hohe Wasseraufnahmefähigkeits- (WAF)-Werte. Sie fallen auch—im Gegensatz zu Gelen—direkt in kleinstückiger, direkt verwertbarer Form an. Sie sind daher besonders bevorzugt.

In manchen Fällen ist auch der Einsatz einer Mischung von hydrophilen und hydrophoben NCO-Prepolymeren von großem Vorteil, vor allem im Hinblick auf das direkte Anfallen in stückiger Form. Sie können prinzipiell auch nach allen Verfahren und aus Ausgangskomponenten hergestellt werden, wie sie beispielsweise in den DE—OS 23 47, 299, DE—PS 25 21 277, DE—PS 25 21 265, DE—OS 31 03 500, DE—OS 31 03 564 und DE—OS 31 51 925 beschrieben sind.

Ein bevorzugter Weg zur Herstellung der Polyurethan(harnstoff)-Träger liegt in der Herstellung über NCO-Prepolymere (A), welche aus hydrophoben und/oder hydrophilen, höhermolekularen Polyhydroxyl- oder Polyaminverbindungen a) vorzugsweise gegebenenfalls Ethylenoxidgruppenhaltigen Polypropylenetherpolyolen, gegebenenfalls Kettenverlängerungsmitteln b), kationische Gruppen oder kationische Gruppen bildende Gruppen enthaltenden Verbindungen c) und überschüssigen Mengen Polyisocyanat d) hergestellt werden.

Durch Reaktion mit (überschüssigen Mengen an) Wasser tritt Reaktion zum Polyurethan(harnstoff) ein. Das Wasser kann gegebenenfalls geringere Menge von bis etwa 50 Äquivalent-% der NCO-Gruppen von A) an Di- und Polyaminen enthalten.

Die Suspendierung oder Benetzung der Füllstoffe erfolgt bei der diskontinuierlichen Herstellung vorzugsweise zuerst in der überschüssigen wäßrigen Phase, danach wird das NCO-Prepolymere zudosiert.

In geeigneten, kontinuierlich arbeitenden Mischaggregaten, wie einem Doppelpaddel-Schneckentrog können alle Komponenten praktisch gleichzeitig oder nur wenige Sekunden nacheinander zugegeben und intensiv vermischt werden, wobei die Isocyanatreaktionen sofort beginnen. Auf die Reaktionsgeschwindigkeit kann man in bekannter Weise mit Hilfe von Katalysatoren und/oder Anwendung erhöhter Temperaturen Einfluß nehmen. Zum Start der Isocyanatreaktion werden Temperaturen zwischen 10 bis 90°C, bevorzugt 20 bis 70°C gewählt. In vielen Fällen sind die üblichen Raumtemperaturen gut geeignet. Nach einer vollständigen Benetzung der Füllstoffe kann die Reaktionstemperatur bis auf etwa 90°C gesteigert werden.

Wasser ist nicht nur, wie bereits erwähnt, als Reaktionspartner für die Polyisocyanatverbindungen erforderlich, sondern es dient auch als Dispersionsmittel in größeren Überschußmengen gleichgültig, ob hydrophile oder hydrophobe Isocyanatverbindungen eingesetzt werden.

Besonders wichtig ist die resultierende Hydrophilie, d.h. die Wasseraufnahmefähigkeit und das Wasserrückhaltevermögen des Endproduktes, d.h. des hochgefüllten, hydrophilen Polyurethan(harnstoff)-Trägers, die Abreibfestigkeit dieses hydrophilen Trägers, eine möglichst jahrelange Beständigkeit und Unlöslichkeit im wäßrigen System und eine leichte Sinktendanz oder mindestens Schwebefähigkeit in der wäßrigen Phase, d.h. eine nicht aufschwimmende Charakteristik der Teilchen.

Eine Maximale Hydrophilie ist entweder dadurch zu erreichen, daß alle in dominierender Menge verwendeten Komponenten stark hydrophil sind, z.B. Polyurethan(harnstoff)-Vorprodukte wie Polyole oder Kettenverlängerungsmittel oder auch der (in bevorzugt etwa gleicher oder besser größerer Menge als die Polyurethane verwendete) hydrophile Füllstoff. Zu stark hydrophile Polyurethane sind jedoch hinsichtlich

der Langzeitlangerung im Wasser meistens nicht ausreichend beständig und im Wirbelbett nicht abriebfest.

Die Wasseraufnahmefähigkeit der erfindungsgemäß zur verwendenden Träger ist in unterschiedlichen Ausführungsformen der Herstellung bzw. Zusammensetzung zu erzielen, doch gilt als Regel zum Handel, daß ein wesentlicher Anteil der Wasseraufnahmefähigkeit (WAF-Wert) durch die fossilen Zellulosen, d.b. insbesondere Schwarztorf und am günstigsten Braunkohlenstaub, bewirkt wird und die Polyurethan(harnstoff)-Vorprodukte in möglichst geringer Menge und hoher Bindungskraft eingesetzt werden.

Auch die bei der Reaktion mit den NCO-Prepolymeren und Füllstoffen vorhandene Wassermenge ist von großer Bedeutung:

Bei Verwendung von relativ geringen Mengen Wasserüberschuß, beispielsweise 20 Teile Wasser auf 80 Teile NCO-Prepolymer plus Füllstoffe entsteht mit z.B. hydrophoben NCO-Prepolymeren ein feinpulvriges oder krümeliges, nicht ausreichend umhülltes und somit ungeeignetes Produkt mit hoher Ausschwemmrate; erst mit einer deutlich höheren Wassermenge bindet das NCO-Prepolymer die Füllstoffe zu einem abriebfesten, wasseraufnahmefähigen Träger mit den erfindungsgemäß erforderlichen Eigenschaften, indem das NCO-Prepolymer (insbesondere bei entsprechend hoher kationischer Modifizierung) die Füllstoffteilchen erst ausreichend benetzend umhüllt und dann zum Polyurethan(harnstoff) abreagiert und dabei die Braunkohle oder Torf-Teilchen fest, aber wasserdurchlässig einschließt.

Zur Prüfung auf die gewünschten Eigenschaften der Träger unterzieht man etwa 30 bis 300 g große Vorproben der in Betracht gezogenen, hochgefüllten Polyurethan(harnstoff)-Träger, die man durch systematische Variation der Art und Menge der Isocyanatkomponenten und der Füllstoffe in Anwesenheit variabler, aber immer großer Überschußmengen Wasser in kleinen Vorversuchen hergestellt hat, einem Test in mit Wasser gefüllten Säulen, z.B. mit einem Durchmesser von 10 bis 20 cm, durch die man von unten durch eine Fritte oder eine feingelochte Siebplatte Luft strömen läßt. Innerhalb von 24 Stunden läßt sich so der Abreib, die Sinktendenz, die Farbe und die Transparenz der wäßrigen Phase leicht ermitteln. Die Anwesenheit und richtige Dosierung von Überschußmengen Wasser ist, wie dargestelt, bei der Herstellung des Trägermaterials für die vorgesenene Verwendung der gefüllten Polyurethan(harnstoffe) als Bioaktivatoren in biologischen Konversionsprozessen von großer Bedeutung.

Die Formgebung bei der Herstellung der hochgefüllten Polyurethan(harnstoffe) wird in vielen möglichen Varianten auf die jeweilige Verfahrenstechnik der vorgeschlagenen Verwendung abgestimmt. Regelmäßiges oder unregelmäßiges stückiges "Granulat" erhält man nach den üblichen Schneide- oder Granuliertechniken als block-, strang- oder bandförmige Ware. In speziellen Fällen werden die erfindungsgemäß einzusetzenden, hochgefüllten Polyurethan(harnstoffe) in die Bioreaktoren in Folienform gehängt oder spiralartig gewunden eingesetzt. In diesen Fällen werden zur Stabilisierung besonders großer Flächen gegebenenfalls textile Unterlagen nach an sich bekannten Gieß- oder Rakelverfahren mitverwendet.

In der kostengünstigsten und einfachsten Ausführungsform werden die Träger in Form eine unregelmäßigen Granulats in einer Größe von 0,1 bis 10 cm, bevorzugt 0,5 bis 5 cm eingesetzt. Dazu werden die weitgehend oder vollständig ausreagierten, hochgefüllten Polyurethan(harnstoff)e in vorgefertigter Strang-, Block- oder Bandform mit üblichen Zerhackern oder Schneidgranulatoren auf die geeignete Stückgröße zerkleinert. Eventuell entstandenes Feinstkorn kann beim Waschen gegebenenfalls isoliert und abgetrennt werden.

Werden die Isocyanat-Reaktionen in Knetern oder in mit Pflugschar- oder Paddeln ähnlichen Werkzeugen ausgerüsteten Mischapparaturen durchgeführt, ist eine nachträgliche Zerkleinerung meistens nicht mehr notwendig.

Die erfindungsgemäßen, wassergequollenen, hydrophilen Träger stellen im allgemeinen weichelastische, sich mehr oder weniger feucht anfühlende, abriebfeste Teilchen dar, welche sich in Wasser suspendieren lassen und dort langsam absinken.

Es war nicht vorauszusehen, daßt die mit Füllstoffen wie Braunkohle oder Torf hochgefüllten, Polyurethan(harnstoff)massen als Träger mit stark hydrophilen Eigenschaften in homogener Struktur ausreichend abriebfest hergestellt werden können, auf die Biokonversionen einen so günstigen Einfluß nehmen, obwohl die Füllstoffe aktiver Art, wie z.B. Schartztorf und Braunkohle, innerhalb der Polyurethanmasse eingebettet liegen.

Die erfindungsgemäß eingesetzten Träger eignen sich für viele der gebräuchlichen Biokonversionsverfahren, z.B. zur Herstellung von Zitronensäure aus Stärke, zur Hydrolyse von Penicillin G mittels Acylasen zu 6-Aminopenicillinsäure, ferner zur Herstellung von stereospezifisch, biologisch aktiven Verbindungen, oder zur Vergärung von zuckerhaltigen Wässern in der Rübenzuckerindustrie.

Der im Polyurethan inkorporierte Füllstoff hat in mehrfacher Hinsicht einen vorteilhaften Einfluß auf das verbesserte Biokonversions-Verfahren. Je nach Art der Füllstoffe und Art der Polyurethan-Matrix werden die mechanische Festigkeit und die Hydrophilie des Polyurethans verbessert und insbesondere überrachend die bioaktive Assimilationsfähigkeit der gelösten organischen Stoffe wesentlich erhöht. Außerdem ist der im hydrophilen Polyurethan eingebundene Füllstoff oder die Füllstoffmischung gleichzeitig ein Regulator für die Einhaltung optimaler, spezifischer Gewicht der für Wasser durchlässigen, erfindungsgemäß eingesetzten Träger, so daß in den üblichen Gefäßen eine gleichmäßige Verteilung der

Träger mit schwacher Sinktendenz oder die Erhaltung eines schwebenden Zustandes möglich ist. Dies ist für die meisten Prozesse von besonderer Bedeutung oder sogar eine verfahrenstechnische Vorausetzung.

Der Grad der Hydrophilie wird bei den erfindungsgemäßen, hochgefüllten Polyurethan(harnstoff)massen bevorzugt so eingestellt, daß eine hohe Wasseraufnahme innerhalb von Stunden oder wenigen Tagen unter starker Quellung erfolgt oder eine größere Wassermenge bereits bei der Herstellung der Polyurethanmassen als disperse Phase vorliegt und somit die Träger bereits voll gequollen sind.

Der "in situ"-Einbau von Mikroorganismen in Polyurethane oder andere Kunststoffe ist, selbst unter sehr schonenden und technische aufwendigen Bedingungen, nicht ohne wesentlichen Verlust an vermehrungsfähigen Bakterien und starker Minderung der Bioaktivität möglich. Die Herstellungsbedingungen sind dabei insbesondere hinsichtlich Temperatur anzupassen. Trotzdem ist dieses, an sich mögliche Verfahren nicht bevorzugt und zumeist auch nicht notwendig, da ein Aufwachsen von Biomassen in die Braunkohlen oder Torf-haltigen Polyurethan(harnstoff)-Trägermassen in hervorragender Weise erfolgt.

Die Verwendbarkeit der erfindungsgemäßen, Braunkohle- und/oder Torf-haltigen Polyurethan(harnstoff)-Trägermassen liegt in ihrer hochhydrophilen Eigenschaft und ist gegegebenenfalls leicht porigen Struktur begründet. Man kann sie als Bodenverbesserer oder hyrophiler, leicht bewurzelungsfähiger Spezialwachstumsträger für Pflanzen benutzen, da sie beliebige Pflanzennährstoffe enthalten können, einen sehr lange verwertbaren Wassergehalt und gegebenenfalls Düngergehalt aufweisen und leicht wieder rückquellen.

Den Trägermassen können bei der Herstellung auch Samen zugemischt werden, die dann zum Keimen gebracht werden und in z.B. Plattenform z.B. als Petersilienrasen, verwertbar sind oder in kleinstückiger form als Setz-linge mit PU-Trägerstücken eingesetzt werden können.

Eine weitere, wichtige Verwertung liegt in ihrer Verwendung als Träger für Bakterien oder Enzyme in Biokonversionsprozessen zur Herstellung komplizierter organischer Verbindungen. Die stückigen Träger können von den Reaktionsbrüden oder Fermentationsbrüden durch Filtration leicht abgezogen werden.

Ausführungsbeispiele

A) Allgemeine Verfahrensweise zur Herstellung der Trägermassen

A) 1. Herstellung der NCO-Prepolymeren

Die Herstellung der NCO-Prepolymeren erfolgt in an sich bekannter Weise in einer Rührapparatur durch etwa 2- bis 3-stündiges Erhitzen der Ausgangskomponenten (höhermolekulare Polyhydroxylverbindung, gegebenenfalls niedermolekulare Polyole, vorzugsweise tertiären Stickstoff enthaltende Polyole und Polyisocyanate) bei Temperaturen von etwa 70 bis 90°C, bis annähernd der berechnete NCO-Gehalt erreicht ist. Zusammensetzung siehe Tabelle 1).

Im Falle der Herstellung basischer NCO-Prepolymere, die nicht kurzfristig weiter umgesetzt werden, kann deren Lagerstabilität mit sehr kleinen Mengen (z.B. 0.05—0.15 Gew.-%, berechnet auf Prepolymere) an Mineralsäuren (z.B. Schwefelsäure oder Phosphorsäure) wesentlich (z.B. um mehrere Monate) verlängert werden.

TABELLE 1
Zusammensetzung und Charakterisierung der NCO-Prepolymeren (PP) für die Beispiele 1—8.

| Typ | Patent-beispiele | Viskosität mPas/25°C | % NCO | Isocyanat | Polyetherpolyol Menge/Art Menge | NM / Art | DMS | IQU (mAg/1000 g) |
|---|---|---|---|---|---|---|---|---|
| KIPP A | 1, 2, 3, 4 | 12.500 | 5,1 | 16,6 TDI | 80,4 PHILV | 1,5 | 1,5 | 120 |
| KIOPP B | 5, 6 | 64.00 | 5,3 | 19,1 TDI | 57,1 PHILV<br>19,0 PHOBL | 2,4 | 2,4 | 200 |
| KOPP C | 7, 8 | 9.500 | 5,9 | 20,0 TDI | 41,9 PHOBV<br>35,0 PHOBL | 1,5 | 1,5 | 120 |
| OPP D | 5, 6 | 7.800 | 3,3 | 11,9 TDI | 88,1 PHOBV | — | — | — |

Typ=Charakterisierung der NCO-Prepolymeren (PP)
K=Kationisch
I=Hydrophil
O=Hydrophob

Die Mengenangaben in der Tabelle 1 erfolgen in Gewichtsteilen.

Eingesetzt Isocyanate:

TDI = Toluylendiisocyanat-2,4-, 2,6-Isomerengemisch 80:20

D44R = Destillationsrückstand aus der Produktion von 4,4'-Diphenylmethandiisocyanat, Anteile an höheremolekularen Polyphenylpolymethylen-polyisocyanaten enthaltend, NCO-Gehalt 29,8 Gew.-%.

Polyetherpolyole:

PHILV = hydrophiler, verzweigter Polyether, gestartet auf Trimethylolpropan, umgesetzt mit 40 Teilen Propylenoxid und 60 Teilen Ethylenoxid, OH-Zahl 26.

PHOBV = hydrophober, verzweigter Polyether, gestartet auf Trimethylolpropan mit 80 Teilen Propylenoxid und danach 20 Teilen Ethylenoxid umgesetzt, OH-Zahl 28.

PHOBL = hydrophober, linearer Polyether aus 1.4-Butandiol und Propylenoxid, OH-Zahl 56.

Verbindungen mit tertiärem Stickstoff:

NM = N-Methyl-diethanolamin

Quaternierungsmittel:

DMS = Dimethylsulfat

PPS = 85 %ige Polyphosphorsäure

Ionifizierungsangaben:

IQU = Kationenäquivalent oder tertiäres Stickstoffäquivalent (Kationen bildende Gruppe) in Milliäquivalenten pro 1000 g NCO-Prepolymer.

A2). Umsetzung der NCO-Prepolymeren zu den Trägermassen entsprechend Patentbeispielen 1—8 (allgemeine Verfahrensvorschrift)

Der Füllstoff wird in der angegebenen Menge Wasser suspendiert und/oder benetzt das NCO-Prepolymer schnell und intensiv bei Raumtemperatur eingerührt. Im Falle der stark hydrophilen NCO-Prepolymeren erstarrt das Reaktionsgemisch bei Raumtemperatur schon nach wenigen Minuten z.B. 1 bis 3 Minuten, bei den hydrophoben NCO-Prepolymeren jedoch erst nach 1 bis 2 Stunden. Die Reaktionszeit wird gegebenenfalls durch zugabe von 0,1 bis 0,5 Gew.-% Katalysator, bezogen auf Prepolymermenge, und/oder durch Verwendung von heißem Wasser (ca. 80°C) auf wenige Minuten verkürzt.

Soweit die Kationenbildung im Prepolymer noch nicht erfolgt ist (z.B. durch Quaternierung), fügt, man der wäßrigen Füllstoffsuspension die berechnete Menge an Säuren (hier wird Phosphorsäure bevorzugt) zur Aminsalzbildung zu oder nutzt im Falle der Verwendung von Braunkohle oder Torf als Füllstoffe die darin enthaltenen Huminsäuren zur Salzbildung unter Ausbildung von Polyurethan-Humaten.

Die so hergestellten, erfindungsgemäßen Trägermassen sedimentieren je nach Zusammensetzung verschieden schnell, aber vollständig in Wasser.

Beispiel 1

Trägermaterial:

67,7 Gew.-Teile einer nativen Braunkohle aus dem Aachener Braunkohlerevier mit 52% Restfeuchte, welche zu Teilchen unter 200 µm zerkleinert wurden und somit als Braunkohlenstaub vorliegen, werden in 35,2 Gew.-Teilen Wasser verührt und nach dem allgemeinen Herstellungsverfahren, wie oben angegeben, mit 7,5 Gew.-Teilen des kationischen NCO-Prepolymeren KIPP-A (5,1 Gew.-% NCO) verrührt. Es entsteht ein Trägermaterial in Form eines Wassergequollenen, sich feucht anfühlenden, leicht elastischen Feststoffes, der in Stücke unter einer Größe von 12 mm granuliert wird. Das feste, mit Braunkohle gefüllt kationische Polyurethan(harnstoff)-Trägermaterial enthält 32,5 g Braunkohle-Trockensubstanz in 40 g wasserfrei angenommener Trägermasse (aus wasserfrei berechneter Braunkohle und wasserfrei angenommener Polyurethane), folglich 81,25 Gew.-%, an Braunkohle, bezogen auf Trockenmasse des gefüllten Polyurethan(harnstoff)-Trägers.

Das erhaltene, granulierte Trägermaterial wird nun mit überschüssigem Wasser versetzt, etwa 24 Stunden (bei Raumtemperatur) vollständig gequollen und nach dem Aufrühren das darüber stehende Wasser abdekantiert. Der hieraus abgeleitete Wert, der die Gewichtsprozentmenge Wassers im und zwischen gequollenen Träger (füllstoffhaltigem Polyurethanharnstoff) angibt, wird hier als Wasseraufnahmefähigkeit (WAF) beziechnet. (siehe nähere Erläuterung weiter unten).

Der Feststoffgehalt der so hergstellten wäßrigen Suspension des Granulats in Form eines nunmehr stark gequollenen Trägermaterials beträgt im Beispielfall 140 g Feststoff pro Liter "Suspension" (ohne überstehendes Wasser). Der Feststoffgehalt in einem Liter einer derartigen Suspension (ohne überstehendes Wasser) wird als Trockensubstanz der Suspension (abgekürzt TS(S)) bezeichnet. Das Gewicht von einem Liter dieser Suspension des stark gequollenen Trägermaterials (ohne überstehendes Wasser) wird als Suspensionsgewicht (abgekürzt SG) bezeichnet.

Aus dem Gewicht von einem Liter der Suspension (SG) und dem Wert der darin enthaltenen Trockenmasse des Träger (TS-S) wird der Wert des sogenannten Suspensionsfaktors (F4) abgeleitet. Der

Wert des Suspensionsfaktors F4 minus 1 (F4−1) gibt, an, die wievielfache Menge Wasser (bezogen auf Träckertrockensubstanz) in der Suspension insgesamt (als Quellwasser und als Wasser in den Zwischenräumen in oder zwischen den Trägerpartikeln) sich befindet.

Der Wert des Suspensionsfaktors F4 wird in Praxis dadurch bestimmt, daß man die Trägertrockenmasse von einem Liter einer Suspension der Träger in Wasser (ohne überstehendes Wasser) bestimmt und das Gewicht der Suspension (SG) durch das Gewicht der darin enthaltenden Trägertrockenmasse (TS(S)) dividiert:

$$F4=\frac{SG}{TS(S)}.$$

Aus diesem Wert des Suspensionsfaktors F4 kann die Wasseraufnahmefähigkeit (WAF) als Charakteristikum für die erfindungsgemäß zu verwendenden Trägermassen nach folgender Formel bestimmt werden:

$$WAF=\frac{F4\ \text{minus}\ 1}{F4}\cdot 100;\ (\text{in}\ \%).$$

Dieser Wert der Wasseraufnahmefähigkeit (WAF) in Prozenten ausgedrückt, gibt ein anschlauliches Bild für den Zustand der hochgequollenen und gegebenenfalls wasseraufnehmende Zwischenräume tragenden Trägermassen wieder, wie sie in dem gequollenen Zustand in der wäßrigen Suspension verwendet werden. Im Beispiel 1 beträgt beispielsweise der Trockensubstanzgehalt von 1 Liter der Suspension ohne überstehendes Wasser 140 g Feststoff. Bei einem Suspensionsgewicht von 1013 g pro Liter Suspension errechnet sich hieraus der Suspensionsfaktor

$$F4=\frac{1013}{140}=7{,}236.$$

Ein Gewichtsteil Trockensubstanz der Trägermasse wird somit mit der 6,236-fachen Wassermenge in die Beschriebene gequollene Suspensionsform überführt. Anders ausgedrückt, berägt der Wert der Wasseraufnahmefähigkeit 6,236 durch 7,236 mal 100=86,2%.

Zur weiteren Charakterisierung der Trägermassen werden noch die Schüttgewichte (in g/l) nach unterschiedlichen Behandlungsarten bestimmt, wobei die Schüttgewichte S1 bis S3 unter folgenden Bedingungen ermittelt werden:

S1. Schüttgewicht, abgetropft:
die Trägermasse wird 24 Stunden in einer großen Überschußmenge an Wasser suspendiert, danach wird mit dieser gequollenen Masse eine Sieb mit 2 mm Sieblöchern 10 cm hoch gefüllt und 1 Stunde abtropfen gelassen; die verbleibende Füllmenge wird danach in einem Meßgefäß gewogen und auf das Schüttgewicht pro Liter umgerechnet.

S2. Schüttgewicht, ansgequetscht:
Die nach S1 abgetropfte Trägermasse wird auf einem 1 mm Sieb 5 Minuten lang einem Druck von 3 bar ausgesetzt und danach in einem Meßgefäß gewogen. Nach Umrechnung auf einen Liter wird das Schüttgewicht S2 ermittelt.

S3. Schüttgewicht, getrocknet:
Die feuchte, ausgequetschte Trägermasse wird (etwa) 1 Tag bei 110° unter Vakuum bis zur Gewichtskonstanz getrocknet und in einem Meßgefäß wie oben ausgewogen.

Im oben angeführten Beispiel betragen die so bestimmten Werte von S1 bis S3:
S1 (abgetropft) 515 g/l
S2 (ausgequetscht) 503 g/l
S3 (getrocknet) 239 g/l.

Zur besseren Vergleichbarkeit der Werte werden noch folgende Faktoren definiert;

F1: Der Volumenfaktor, ist der Quotient aus dem Gewicht der in Wasser gequollenen, abgetropften Probe pro Liter (Schüttgewicht (S1)) und der ermittelten Gewichtsmenge Trockensubstanz aus einem Liter wäßriger Suspension (TS(S)).

$$F1=\frac{S1}{TS(S)}$$

F2: Der Quetschfaktor ist ensprechend der Quotient der ausgequetschten Probe pro Liter (Schüttgewicht S) und der Trockensubstanzmenge pro Liter Suspension.

$$F2=\frac{S2}{TS(S)}$$

F3: Der Quellfaktor ist der Quotient aus der Gewichtsmenge der abgetropften Probe (S1) und die nach vollständiger Entfernung des Wassers aus der abgetropften Probe ermittelten Gewichtsmenge der Trockenmasse (TS(S1)).

$$F3=\frac{S1}{TS(S1)}$$

Die Volumen-, Quetsch- und Quellfaktoren sollen mindestens 2, bevorzugt mindestens 3, besonders bevorzugt mindestens 4 betragen. Die Obergrenzen der genannten Faktoren liegen etwa unterhalb 20, bevorzugt unter 15. Außerdem sollen sich die drei Faktoren der gleichen Probe möglichst wenig unterscheiden, d.h. maximal nur um das Dreifache, bevorzugt nur um das Doppelte unterschiedlich sein.

Beispiel 2

2.1 Trägermaterial:

Mit Braunkohle gefüllte, ampholytische (Kationen und Anionen enthaltende) Polyurethan(harnstoff)-masse nach der Herstellungsmethode A aus

41,66 Gew.-Teilen nativer Braunkohle mit 52% Restfeuchte (20,0 Gew.-Teile Trockensubstanz an Braunkohle), zerkleinert unter eine Größe von 200 µm, 10,0 Gew.-Teile kationisches NCO-Prepolymer KIPP-A (wie in Beispiel 1)

70,0 Gew.-Teile Wasser, in dem 0,2 Gew.-Teile Diaminosulfonat der Formel

$$\begin{array}{l} H_2N-CH_2-CH_2-CH-NH_2 \\ \qquad\qquad\qquad\quad | \\ \qquad\qquad\qquad\quad CH_2 \\ \qquad\qquad\qquad\quad | \\ \qquad\qquad\qquad\quad SO_3Na \end{array}$$

Das Trägermaterial enthält im Feststoff (wasserfrei) etwa 66,6 Gew.-% Braunkohle.

Es liegt ein geringer Kationüberschuß vor.

Das Granulat wurde in Stückgrößen unter 12 mm zerkleinert. Der (TS-(S))-Wert beträgt in Wasser suspendiert 112 g/l Suspension (ohne überstehendes Wasser; siehe Erläuterungen bei Beispiel 1).

Die Schüttgewichte (g/l) betragen:

| | |
|---|---|
| Abgetropft: | 645 g/l (S1), |
| Ausgequetscht: | 505 g/l (S2), |
| Getrocknet: | 349 g/l (S3). |

(Werge der prozentualen Wasseraufnahmefähigkeit (WAF) und des prozentualen Feststoffgehaltes (% FKS)-vgl. für alle Beispiele in Tabelle 2, die auch zum Vergleich alle Werte F1 bis F4 enthält).

Biespeil 3

Trägermaterial aus kationischem Polyurethan(harnstoff) mit je 33,3 Gew.-% Seesand und 33 Gew.-% Braunkohlenstaub (bezogen auf Trockensubstanz)

Nach dem allgemeinen Verfahren wird ein kationischer Polyurethan(harnstoff) aus Isocyanat-Prepolymer KI-PP-A und Seesand (Feinheit unter 300 µm) hergestellt. (10 Gew.-Teile kationisches NCO-Prepolymer KI-PP-A, 70 Gew.-Teile Wasser, 10 Gew.-Teile Seesand) und 11,25 Gew.-Teile Wasser, 10 Gew.-Teile Seesand) und 11,25 Gew.-Teile Braunkohlenstaub mit 11% Restfeuchte (=10,0 g Braunkohlenstaub ohne Feuchtigkeit). Das erhaltene Granulat wird zu einer Größe unter 12 mm zerkleinert eingesetzt. Der Trockensubstanzgehalt beträgt 84,5 g/l Suspension, die Schüttgewichte S1): 645 g/l (abgetropft); S2): 566 g/l (ausgequetscht); S3): 02 g/l (getrocknet).

Beispiel 4—Vergleichsversuch zu dem Beispiel 1—3 (nicht erfindungsgemäß)

4.1 Trägermaterial: (Vergleich)

Es wird ein kationischer Polyurethan(harnstoff) aus Isocyanatprepolymer KI-PP-A, jedoch ohne Füllstoff hergestellt (15 Teile NCO-Prepolymer KI-PP-A und 85 Teile Wasser). Das erhaltene Granulat wird unter 12 mm zerkleinert eingesetzt.

4.2 Verwendung als Trägermaterial für beabsichtigte biologische Konversionsverfahren:

Die Substanz nach Beispiel 4 (Vergleich) mußte in einer Rührapparatur eingesetzt werden, da dieses Trägermaterial (ohne Füllstoff!) in einer Festbett-Apparatur selbst noch nach Wochen aufschwamm. In einer Wirbelbett-Apparatur ist dieses Material absolut unbrauchbar.

Der TS(S)-Wert von Beispiel 5—Granulat beträgt 36 g/l, die Schüttgewichte: S1: 520 g/l (abgetropft); S2: 490 g/l (ausgequetscht) und S3: 219 g/l (getrocknet).

Beispiel 5

5. Trägermaterial:

Kationische Polyurethan(harnstoff)masse, gefüllt mit 50 Gew.-% Braunkohlenstaub und 25 Gew.-% (bezogen auf Trockensubstanz) Schwarztorf.

Nach dem üblichen Verfahren (wie in der Herstellungsvorschift A beschreiben) werden

22,47 Gew.-Teile einer Braunkohle mit 11% Restfeuchte (entsprechend 20 Gew.-Teile Braunkohle-Trockensubstanz) in zerkleinerter Form (unter 100 µm) und 12,35 Gew.-Teile Schwarztorf mit 19% Restfeuchte (entsprechend 10 Gew.-Teilen Schwarztorf-Trockensubstanz), mit einem Faseranteil von 8 Gew.-% unter 200 µm zerkleiniert, werden mit 10 Gew.-Teilen einer Mischung des kationischen Prepolymers KIOPP-B und des nichtionischen NCO-Prepolymers OPPD im Gewichtsverhältnis 3:2, enthaltend 4,5 Gew.-% NCO im Prepolymergemisch, und 55,3 Gew.-Teilen Wasser umgesetzt. Der entstandene hochgefüllte Polyurethan(harnstoff)-Träger wird zu einem Granulat unter 20 mm Stückgröße zerkleinert. In Wasser suspendiert beträgt der Gehalt an Trockensubstanz TS(S) 108 g/l, die Schüttgewichte betragen:

| | |
|---|---|
| Abgetropft: | 386 g/l, (S1) |
| Ausgequetscht: | 412 g/l, (S2) |
| Getrocknet: | 158 g/l (S3) (siehe Tabelle 2). |

Ersetzt man den 11% Restfeuchte enthaltenden Braun-Kohlenstaub durch eine entsprechende Menge an voll getrocknetem Braunkohlestaub (<1 Gew.-% Wasser), werden bei der Verwendung in Biokonversionsverfahren praktisch gleiche Ergebnisse erzielt; es ist daher in der Praxis nicht erforderlich, einen solchen Trockenprozeß für den Braunkohlenstaub vorangehen zu lassen. Außerdem ist die Rückschwellung und Benetzung völlig getrockneter Braunkohlenstäube sowohl zeitraubend als auch technologisch erschwert.

Beispiel 6

Kationische Polyurethan(harnstoff)masse, gefüllt mit 40 Gew.-% Schwartztorf und 28 Gew.-% Anthrazitstaub

Eine kationische Polyurethan(harnstoff)masse nach Herstellungsmethode A aus 12,3 Gew.-Teilen Schwarztorf wie in Patentbeispiel 5 (10 Gew.-% Wasserfreier Schwarztorf) 7 Gew.-Teile Anthrazitstaub, unter 90 µm zerkleinert, 8 Gew.-Teile der kationischen NCO-Prepolymere-Mischung von Beispiel 5 (4,5% NCO) und 73 Gew.-Teile Wasser werden wie üblich umgesetzt und zu einem Granulat unter 12 mm zerkleinert. In Wasser suspendiert beträgt der Gehalt an Trockensubstanz (TS(S)) 87 g/l. Schüttgewichte sind:

| | |
|---|---|
| Abgetropft: | 538 g/l (S1), |
| Ausgequetscht: | 408 g/l (S2), |
| Getrocknet: | 172 g/l (S3) (siehe Tabelle 2). |

Beispiel 7

7.1 Trägermaterial:

Kationische Polyurethan(harnstoff)masse mit 50 Gew.-% Schwarztorf (Trockenmasse)

In üblicher Weise wird nach der Herstellungsmethode A eine kationische Polyurethanmasse aus 24,7 Gew.-Teilen Schwarztorf wie in Patentbeispiel 5 (entsprechend 20 Gew.-Teilen wasserfreiem Schwarztorf), 20 Gew.-Teilen kationischem NCO-Prepolymer KOPP-C (hydropobes NCO-Prepolymer mit 5,9 Gew.-% NCO) und 56,3 Gew.-Teilen Wasser zur hochgefüllten Trägersubstanz umgesetzt und diese unter 12 mm granuliert. In Wasser suspendiert beträgt der Feststoffgehalt (TS(S)-Wert) 69,3 g/l. Die Schüttgewichte betragen:

| | |
|---|---|
| Abgetropft: | 397 g/l (S1), |
| Ausgequetzcht: | 377 g/l (S2), |
| Getrocknet: | 140 g/l (S3) (siehe Tabelle 2). |

Beispiel 8

Kationische Polyurethanharnstoffmasse mit 80 Gew.-% Braunkohlenstaub (bezogen auf Trockensubstanz)

45 Gew.-Teile Braunkohlenstaub aus dem Aachener Braunkohlenrevier mit 11 Gew.-% Restfeuchte und einer Teilchengröße unter 100 µm (entsprechend 40 Gew.-Teilen Braunkohle-Trockensubstanz),

45 Gew.-Teile 90°C heißes Wasser und 0,05 Gew.-Teile Dibutylzinndilaurat werden in eine trogartig geformte, beheizbare, gegenläufige, zwangsweise fördernde Doppelpaddel-Schneckenmaschine gleichzeitig mit 10 Gew.-Teilen NCO-Prepolymer KOPP-C (NCO-Gehalt 5,9 Gew.-%) kontinuierlich eingetragen. Die Reaktionstemperatur der Mischung beträgt 60—70°C und die Verweilzeit etwa 5 Minuten. Danach kann das weitgehend ausreagierte, direkt in stückiger Form (unter 12 mm Stückgröße) anfallende oder zerkleinerte Reaktionsprodukt entweder direkt oder zu einem späteren Zeitpunkt in Wasser suspendiert werden, wo es sofort vollständig sedimentiert. Der Feststoffgehalt (TS(S))-Wert beträgt 185 g/l.

Die Schüttgewichte betragen:
S1 483 g/l; S2 440 g/l; S3 266 g/l (siehe Tabelle 2).

TABELLE 2

Volumen-, Quetsch- und Quellfaktoren, sowie Suspensionsfaktoren, % Wasseraufnahmefähigkeit und % Feststoffgehalt der hochgefüllten Polyurethan(harnstoff)-Trägermassen (Übersicht—Beispiele 1 bis 8)

| Beispiel | F1 Volumen-Faktor | F2 Quetsch-Faktor | F3 Quell-Faktor | F4 Suspen-sions Faktor | % WAF Wasseraufnahme | % FKS Feststoffgehalt in der Suspension |
|---|---|---|---|---|---|---|
| 1 | 3,7 | 3,6 | 3,3 | 7,2 | 86,1 | 13,9 |
| 2 | 5,8 | 4,5 | 4,4 | 9,1 | 89,0 | 11,9 |
| 3 | 8,0 | 6,7 | 5,6 | 12,0 | 91,7 | 8,3 |
| 4 | 14,4 | 13,6 | 13,4 | 28,5 | 96,5 | 3,5 (Vergleichs-versuch) |
| 5 | 5,4 | 4,4 | 4,9 | 9,5 | 89,5 | 10,5 |
| 6 | 6,2 | 4,7 | 6,0 | 11,6 | 91,4 | 8,6 |
| 7 | 5,4 | 5,4 | 3,8 | 14,5 | 93,1 | 6,9 |
| 8 | 2,6 | 2,4 | 2,6 | 6,0 | 83,3 | 16,7 |

Die Differenz des % WAF-Wertes (Wasseraufnahmefähigkeit) auf 100 stellt den prozentualen Gehalt (% FKS) in der Suspension (ohne überstehendes Wasser) dar.

**Patentansprüche**

1. Verfahren zur Herstellung von füllstoffhaltigen, hydrophilen Polyurethan(harnstoffen) aus NCO-Prepolymeren, Füllstoffen und Wasser, dadurch gekennzeichnet, daß man

A) di- und/oder mehrfunktionelle, hydrophile und/oder hydrophobe NCO-Prepolymere, mit einer Funktonalität ≥2,1 und einem NCO-Gehalt von 2 bis 12 Gew.-% NCO auf der Basis von

a) zwei und/oder mehrfunktionellen, hydrophilen und/oder hydrophoben, höhermolekularen Verbindungen mit gegenüber Isocyanaten reaktiven H-Atomen mit Molekulargewichten von 400 bis 10 000, vorzugsweise Polyhydroxylverbindungen,

b) 0 bis 5 Mol pro Mol a) niedermolekularen, zwei- und/oder mehrwertigen Verbindungen des Molekulargewichts 32 bis 399 und gegen- über Isocyanaten reaktiven H-Atomen, vorzugsweise Di- und/ oder Polyolen,

c) kationische Gruppen aufweisenden oder kationische Gruppen bildenden Polyurethan-Ausgangskomponenten auf Basis der höhermolekularen Komponente a) und/oder der niedermolekularen Komponente b)

d) überschüssigen Menge bezogen auf a) bis c) an Di- und/oder Polyisocyanaten, vorzugsweise aromatischen Diisocyanaten, zur Ausbildung von NCO-Prepolymeren mit NCO-Gehalten von 2 bis 12 Gew.-% NCO (vorzugsweise 2,5 bis 8 Gew.-%),

B) gegebenenfalls mit Zusätzen von weiteren, niedermolekularen Polyisocyanaten zum NCO-Prepolymer A) in Mengen bis zu halben Gewichsanteil von A) und bis zur Ausbildung von (A+B)-Mischungen mit NCO-Gehalten ≤30 Gew.-% NCO,

C) in überstöchiometrischen Mengen an Wasser, vorzugsweise einer Mindestens 2-fachen bis etwa 60-fachen Gewichtsmenge, bezogen auf Feststoffgehalt von A+B, gegebenenfalls in Mischung mit Polyaminen, wobei diese vorzugsweise bis maximal 50 Äquivalent-% der NCO-Gruppen in A/B verwendet werden,

D) mit Braunkohle und/oder Torf, vorzugsweise Braunkohlenpulver und/oder feinteiligem Schwarztorf, in Mengen von 0,1 bis 95 Gew.-%, vorzugsweise ≥15 bis 95 Gew.-%, bezogen auf die füllstoffhaltigen Polyurethan(harnstoff)-Massen (Trockensubstanz), und

E) gegebenenfalls in Gegenwart von weiteren anorganischen und/oder organischen Füllstoffen (wobei stückige, zerkleinerte Schaumstoffe ausgenommen sind) und üblichen Zusatzstofen, Katalysatoren und Hilfsmitteln der Polyurethanchemie, zu füllstoffhaltigen, hydrophilen, in wäßrigem Milieu abreibfesten, stark quellfähigen, nicht ausblutenden vorzugsweise stückigen Polyurethan(harnstoff)-Massen mit einem Wert der Wasseraufnahmefähigkeit (WAF-Wert) von ⩾33 Gew.-% bis 97 Gew.-%, bezogen auf wassergequollene, füllstoffhaltige Polyurethan(harnstoff)-Suspension ohne überstehendes Wasser, und einem Gehalt an kationischen Gruppen von 10 bis 3000, vorzugsweise 30 bis 1500 Milliäquivalenten kationischer oder kationenbildender Gruppen pro 1000 g wasser- und füllstofffreier Polyurethan(harnstoff)-Masse, umsetzt.

2. Verfahren nach Anspruch 1, dadurch gekennzeichnet, daß man NCO-Prepolymere A) mit einem NCO-Gehalt von 2,5 bis 8 Gew.-%, auf der Basis von

a) mehrfunktionellen, hydrophilen und/oder hydrophoben, Polyetherpolyolen mit einer Gesamtfunktionalität von ⩾2,1,

b) 0 bis 2 Mol pro Mol a) niedermolekularen Di- und/oder Polyolen vom Molekulargewicht 62 bis 254

c) und kationischen Polyurethan-Ausgangskomponenten mit quaternären Ammoniumgruppen oder salzbildenden tertiären Aminogruppen, vorzugsweise Di- oder Polyolen mit tertiären Aminogruppen,

d) und überschüssigen aromatischen Diisocyanaten einsetzt.

3. Verfahren nach Ansprüchen 1 und 2, dadurch gekennzeichnet, daß man zur Herstellung von NCO-Prepolymeren A als höhermolekulare Verbindung A a) hydrophobe Polyetherpolyole einsetzt.

4. Verfahren nach Ansprüchen 1 bis 3, dadurch gekennzeichnet, daß man Braunkohlenpulver und/oder feinteiligen Schwarztorf in Mengen von >50 bis 90 Gew.-%, vorzugsweise 75 bis 90 Gew.-% bezogen auf die füllstoffhaltigen Polyurethan(harnstoff)-Massen, einsetzt.

5. Verfahren nach Ansprüchen 1 bis 4, dadurch gekennzeichnet, daß man Braunkohlenpulver als Füllstoffe D) einsetzt.

6. Verfahren nach Ansprüche 1 bis 5, dadurch gekennzeichnet, daß man weitere anorganische und/oder organische Füllstoffe E) zusetzt.

7. Verfahren nach Ansprüchen 1 bis 6, dadurch gekennzeichnet, daß man als anorganische Füllstoffe E) Seesand, Eisen-II und/oder -III-Oxide, einschließlich Magnetit, Aerosil, Kieselsäuresole oder Wasserglas zusetzt.

8. Verfahren nach Ansprüchen 1 bis 7, dadurch gekennzeichnet, daß man zusätzlich Biomassen einbaut.

9. Braunkohle und/oder Torf enthaltende Polyurethan-(harnstoff)-Massen hoher Wasseraufnahmefähigkeit, herstellt nach den Verfahren nach Ansprüchen 1 bis 8, gekennzeichnet, durch einen Braunkohlen- und/oder Torf-Gehalt von 15 bis 95 Gew.-%, einen Gehalt von 30 bis 1500 Milliäquivalenten pro kg an kationischen Gruppen oder kationische Gruppen bildenden Gruppen und einem Wasseraufnahmefähigkeitswert (WAF) von >50 bis 95 Gew.-% Wasser, bezogen auf wassergequollene, füllstoffhaltige Polyurethan(harnstoff)-Suspension.

10. Verwendung der Massen nach Ansprüchen 1 bis 9 als in Wasser gut suspendierbare, gegebenenfalls Biomassen eingebaut enthaltende Träger in feinteiliger oder stückiger Form in Biokonversionsprozessen zur Herstellung organischer Verbindungen, als gegebenenfalls Pflanzenwuchsstoffe, Dünger und/oder Samen enthaltende Träger mit hohem Wasserbindvermögen für Pflanzenwachstum, als Filtriermedium oder als Adsorbentien für wasserunlösliche Flüssigkeiten.

**Revendications**

1. Procédé de préparation de polyuréthanne(-urées) hydrophiles contenant des matières de charge à partir de prépolymères à groupe NCO, de matières de charge et d'eau, caractérisé en ce que l'on fait réagir

A) des prépolymères à groupes NCO di- et/ou polyfunctionnels, hydrophiles et/ou hydrophobes, à une fonctionnalité supérieure ou égale à 2,1 et une teneur en NCO de 2 à 12% en poids de NCO, à base de

a) des composés à haut poids moléculaire di- et/ou polyfonctionnels, hydrophiles et/ou hydrophobes, contenant des atomes d'hydrogène réactifs avec les isocyanates, à des poids moléculaires de 400 à 10 000, de préférence des composés polyhydroxylés,

b) 0 à 5 mol par mole de a), de composés di- et/ou polyvalents à bas poids moléculaire, de poids moléculaire 32 à 399, contenant des atomes d'hydrogène réactifs avec les isocyanates, de préférence des di- et/ou polyols,

c) des composants de départ de la préparation de polyuréthannes contenant des groupes cationiques ou formant des groupes cationiques, à base du composant à haut poids moléculaire a) et/ou du composant à bas poids moléculaire b),

d) un excès, par rapport à a) à c), de di- et/ou polyisocyanates, de préférence des diisocyanates aromatiques, pour formation de prépolymères à groupes NCO à des teneurs en groupes NCO de 2 à 12% en poids (de préférence de 2,5 à 8% en poids),

B) éventuellement avec des adjonctions d'autres polyisocyanates à bas poids moléculaires, en plus du prépolymère à groupes NCO A), en quantités allant jusqu'à la moitié du poids de A), et jusqu'à formation de mélanges (A+B) à des teneurs en NCO inférieures ou égales à 30% en poids,

C) dans un excès d'eau par rapport à la quantité théorique, de préférence en quantité d'au moins deux fois et jusqu'à environ soixante fois le poids des matières solides contenues dans A+B,

éventuellement un mélange avec des polyamines, lesquelles sont de préférence utilisées en quantités représentant au maximum 50 équivalents % par rapport aux groupes NCO contenus dans A/B,

D) avec du lignite et/ou de la tourbe, de préférence de la poudre de lignite, et/ou de la tourbe noire en fines particules, en quantités de 0,1 à 95% en poids, de préférence en quantités supérieurs ou égales à 15 et pouvant aller jusqu'à 95% en poids, par rapport aux masses de polyuréthanne(-urées) contenant les matières de charge (sur les matières seches) et

E) éventuellement en présence d'autres matières de charge minérales et/ou organiques (à l'exception des mousses broyées en morceaux) et des additifs, catalyseurs et produits auxiliaires usuels de la chimie des polyuréthannes,

avec formation de masses de polyuréthanne(-urées) contenant des matières de charge, hydrophiles, résistant à l'abrasion en milieux aqueux, fortement gonflables, n'exsudant pas de préférence à l'état de morceaux, avec une valeur de la capacité d'absorption de l'eau (valeur CAE) supérieure ou égale à 33% en poids et pouvant aller jusqu'à 97% en poids, par rapport à la suspension de la polyuréthanne(-urée) contenant les matières de charge et gonflée à l'eau, sans l'eau surnageante, et à une teneur en groupe cationiques de 10 à 3 000, de préférence de 30 à 1 500 équivalents de groupes cationiques ou formant des cations pour 1 000 g de la masse de polyuréthanne(-urée) séche et sans matière de charge.

2. Procédé selon la revendication 1, caractérisé en ce que l'on utilise des prépolymères à groupes NCO A) à une teneur en NCO de 2,5 à 8% en poids, à base de

a) des polyéther-polyols polyfonctionnels hydrophiles et/ou hydrophobes, à une fonctionnalité globale supérieure ou égale à 2,1,

b) 0 à 2 mol par mole de a) de di- et/ou polyols à bas poids moléculaire, de poids moléculaire 62 à 254,

c) et des composants de départ cationiques de la formation de polyuréthannes contenant des groupes ammonium quaternaires ou des groupes amino tertiaires salifiables, de préférences des di- ou polyols à groupes amino tertiaires,

d) et un excès de diisocyanates aromatiques.

3. Procédé selon les revendications 1 et 2, caractérisé en ce que l'on utilise en tant que composés à haut poids moléculaire A a) pour la préparation des prépolymères à groupes NCO A des polyéther-polyols hydrophobes.

4. Procédé selon les revendicatioks 1 à 3, caractérisé en ce que l'on utilise de la poudre de lignite et/ou de la tourbe noire en fines particules en quantités supérieures à 50 et pouvant aller jusqu'à 90% en poids, de préférence en quantités de 75 à 90% en poids, par rapport aux masses de polyuréthanne(-urées) contenant les matières de charge.

5. Procédé selon la revendications 1 à 4, caractérisé en ce que l'on utilise en tant que matière de charge D) de la poudre de lignite.

6. Procédé selon les revendication 1 à 5, caractérisé en ce que l'on ajoute d'autres matières de charge minérales et/ou organiques E).

7. Procédé selon les revendications 1 à 6, caractérisé en ce que l'on utilise en tant que matières de charge minérales E) du sable marin, des oxydes de fer-II et/ou -III, y compris de la magnétite, de l'Aerosil, des sols de silice ou des lessives de silicate de sodium.

8. Procédé selon les revendications 1 à 7, caractérisé en ce que l'on incorpore en outre des biomasses.

9. Masses de polyuréthanne(-urées) conenant du lignite et/ou de la tourbe, à forte capacité d'absorption de l'eau, préparées par un procédé selon les revendications 1 à 8, et caractérisées en ce qu'elles contiennent de 15 à 95% en poids de lignite et/ou de tourbe, de 30 à 1 500 milliéquivalents par kg de groupes cationiques ou de groupes formant des groupes cationiques, et ont une capacité d'absorption de l'eau (CAE) supérieure à 50 et pouvant aller juqsu'à 95% en poids d'eau, par rapport à la suspension de la polyurèthanne(-urée) contenant des matières de charge et gonflée par l'eau.

10. Utilisation des masses selon les revendications 1 à 9, en tant que supports bien suspensibles dans l'eau, contenant les cas échéant des biomasses, à l'état de fines particules ou à l'état de morceaux, dans des opérations de bioconversion pour la préparation de composés organiques, en tant que support, contenant éventuellement des substances de croissance des végétaux, des engrais et/ou des graines, à haute capacité de fixation de l'eau, pour la croissance de végétaux, en tant que milieux filtrants ou en tant qu'adsorbants pour des liquides insolubles dans l'eau.

**Claims**

1. Process for the preparation of filler-containing hydrophilic polyurethane(urea)s from isocyanate prepolymers, fillers and water, characterised in that

A) di- and/or higher functional, hydrophilic and/or hydrophobic isocyanate prepolymers having a functionality ⩾2.1 and an isocyanate content of from 2 to 12% by weight of NCO and based on

a) di- and/or higher functional hydrophilic and/or hydrophobic relatively high molecular weight compounds containing isocyanate reactive H atoms and having molecular weights of from 400 to 10,000, preferably polyhydroxyl compounds,

b) from 0 to 5 mol, per mol of a), of low molecular weight, divalent and/or higher valent compounds in the molecular weight range of from 32 to 399 containing isocyanate reactive H atoms, preferably di- and/or polyols,

c) polyurethane starting components based on the relatively high molecular weight components a) and/or the low molecular weight components b) and containing cationic groups or forming cationic groups and

d) excess quantities, based on a) to c), of di- and/or polyisocyanates, preferably aromatic diisocyanates, to form isocyanate prepolymers having isocyante contents of from 2 to 12% by weight NCO (preferably 2.5 to 8% by weight) are reacted,

B) optionally with the addition of other, low molecular weight polyisocyanates to the isocyanate prepolymer A) in quantities of up to half the quantity by weight of A) and until (A+B) mixtures having NCO contents ≤30% by weight of NCO are obtained,

C) in greater than stoichiometric quantities of water, preferably at least twice and up to about 60 times the quantity by weight, based on the solids content of A+B, optionally as a mixture with polyamines, which are preferably used in quantities of not more than 50 equivalents-% of NCO groups in A/B,

D) with lignite and/or peat, preferably lignite powder and/or finely divided black peat, in quantities of from 0.1 to 95% by weight, preferably ≥15 to 95% by weight, based on the filler-containing polyurethane(urea) masses (dry substance) and

E) optionally in the presence of further inorganic and/or organic fillers (with the exclusion of lumpy, size-reduced foams) and conventional additives, catalysts and auxiliary agents used in polyurethane chemistry, to produce filler-containing, hydrophilic polyurethane (urea) masses which are abrasion resistant in aqueous media, are capable of swelling strongly, do no bleed, are preferably in the form of lumps and have a water absorption capacity (WAF value) of up to 97% by weight, based on the filler-containing polyurethane(urea) suspension which has swelled in water but without supernatant water, and contain from 10 to 3000 milliequivalents, preferably from 30 to 1500 milliequivalents, of cationic groups or cation-forming groups per 1000 g of polyurethane (urea) mass free from water and from filler.

2. Process according to Claim 1, characterised in that the isocyanate prepolymers A) used have an isocyanate content of from 2.5 to 8% by weight and are based on

a) polyfunctional, hydrophilic and/or hydrophobic polyether polyols having a total functionality of ≥2.1,

b) from 0 to 2 mol, per mol of a), of low molecular weight diols and/or polyols having molecular weights of from 62 to 254

c) and cationic polyurethane starting components containing quaternary ammonium groups or salt-forming tertiary amino groups, preferably diols or polyols containing tertiary amino groups,

d) and excess aromatic diisocyanates.

3. Process according to Claims 1 and 2, characterised in that the relatively high molecular weight compound A a) used for the preparation of the isocyanate prepolymers A are hydrophobic polyether polyols.

4. Process according to Claims 1 to 3, characterised in that lignite powder and/or finely divided black peat is used in quantities from above 50 to 90% by weight, preferably from 75 to 90% by weight, based on the filler containing polyurethane(urea) masses.

5. Process according to Claims 1 to 4, characterised in that lignite powder is used as fillers D).

6. Process according to Claims 1 to 5, characterised in that additional inorganic and/or organic fillers E) are used.

7. Process according to Claims 1 to 6, characterised in that the inorganic fillers E) used are sea sand, iron-II and/or -III oxide, including magnetite, aerosil, silica sols or waterglass.

8. Process according to Claims 1 to 7, characterised in that, in addition, bio masses are incorporated.

9. Polyurethane(urea) masses with high water absorption capacity containing lignite and/or peat, prepared by the process according to Claims 1 to 8, characterised by a lignite and/or peat content of from 15 to 95% by weight, a content in cationic groups or groups forming cationic groups of from 30 to 1500 milliequivalents per kg and a water absorption capacity (WAF) of >50 to 95% by weight of water, based on filler-containing polyurethane(urea) suspension which has swelled in water.

10. Use of the masses according to Claims 1 to 9 as carriers in a finely divided form or in the form of lumps, which carriers are readily suspended in water and optionally have bio masses, incorporated therein, in bio conversion processes for the preparation of organic compounds, as carriers with a high water binding capacity for plant growth optionally containing plant growth promoters, fertilizers and/or seeds, as filter media or as adsorbents for water-insoluble liquids.